# EUROPEAN PATENT SPECIFICATION

(11) **EP 4 264 075 B1**
(45) Date of publication and mention of the grant of the patent: **13.08.2025**
(21) Application number: 21827603.8
(22) Date of filing: 01.12.2021
(51) Int. Cl.: B25D 11/00, B25D 11/06, E02F 3/96, F16D 59/00, F16D 63/00

(54) **A HAMMER DEVICE COMPRISING A BRAKE FOR LINEAR MOVEMENT**
HAMMERVORRICHTUNG MIT EINER BREMSE FÜR LINEARE BEWEGUNG
UN DISPOSITIF DE MARTELAGE COMPRENANT UN FREIN POUR UN MOUVEMENT LINÉAIRE

(30) Priority: 15.12.2020 FI 20206303
(43) Date of publication of application: 25.10.2023
(73) Proprietor: Lekatech Oy, 47400 Kausala (FI)
(72) Inventor: PELTOLA, Jyri, 47400 KAUSALA (FI); PELTOLA, Tuomo, 47400 KAUSALA (FI)
(74) Representative: Väänänen, Janne Kalervo
(86) International application number: PCT/FI2021/050833
(87) International publication number: WO 2022/129680

(56) References cited:
- EP-A1- 0 830 493
- WO-A1-2019/068958
- CH-A- 384 500
- DE-A1- 19 621 057
- US-A1- 2017 282 343
- US-B1- 6 568 484

## Description

### Field of the invention

The invention relates to hammer device comprising a brake for linear movement and connectable to an excavator or a to working machine of another kind.

### Background

In many applications, there is a need for linear movement that can be generated with for example a linear electric machine or with hydraulic means. Furthermore, there can be a need to keep the linear movement within an allowed range with the aid of a brake that smoothly stops the linear movement instead of abruptly stopping the linear movement. For example, a brake for linear movement may be useful in a hammer device that is used as an attachment to an excavator or another working machine where the intention is to break up for example stone, concrete, or some other material. A hammer device of the kind mentioned above is often hydraulically driven, allowing it to be connected to the hydraulic system of an excavator or another working machine. The hydraulic hammer device comprises a percussion mechanism capable of delivering impacts to an actuator member, e.g. a chisel, whose end forms a tip which transmits the impacts to material to be broken up. If there are no means for smoothly stopping a linear movement, the hammer device might get damaged in a situation in which an impact is directed to the actuator member when the tip of the actuator member is not against any external material such as stone or concrete, because mechanical structures supporting the actuator receive impacts that would be received by the external material when the external material is being hammered. The impacts directed to the mechanical structures supporting the actuator may cause e.g. material fatigue that may lead to damages.

Braking force generated with a brake for linear movement is advantageously progressive so that the braking force increases along with the linear movement being braked. The progressive braking force makes it possible that a movement range on which the brake is active is short but still the linear movement can be stopped smoothly. For example, in conjunction with a hammer device, a non-progressive brake generating a substantially constant braking force along a linear movement would lead to a compromise between the mechanical length of the construction, smoothness of braking, and power losses which would occur if the movement range on which the brake is active overlaps with the normal operating movement range.

Publication EP 0 830 493 A1 describes a mechanical-hydraulic double-acting drilling jar that comprises an inner tubular mandrel telescopingly supported inside an outer tubular housing. The mandrel and the housing each consist of a plurality of tubular segments joined together, preferably by threaded inner connections. Upper and lower pressure pistons are slidably disposed within the housing, respectively closing upper and lower substantially sealed hydraulic chambers. Longitudinal movement of the mandrel engages the collet, which in turn, translates either the upper piston or the lower piston, depending on the direction of mandrel movement. As one of the pistons is moved, fluid pressure builds in the associated hydraulic chamber, retarding further movement of the mandrel, enabling potential energy to build in the drill string. The collet is restricted from expanding until the mandrel reaches a particular point in the housing, at which time the collet expands, releasing the mandrel to rapidly collide a hammer surface thereon with an anvil surface in the housing.

Publication CH 384 500 A describes a motor-driven hammer tool that comprises a casing, a hollow cylinder closed at one end slidable in the casing, and a piston slidable in the cylinder. The cylinder or the piston is formed as an impact body and the other is connected to a motor by a crank and a connecting rod. An intermediate space between the front of the piston and the closed end of the cylinder acts as an air cushion by which the movement of the driven part is transmitted to the impact body.

Publication DE 196 21 057 A1 describes a hammer drill that has a piston reciprocated within a cylinder and an impact element pneumatically coupled to the piston via an air chamber to impact against an insert at the front end of the cylinder. A second air chamber is provided between the impact element and the insert, with regulation of an air flow from this air chamber to the outside upon compression during the impact element forwards movement.

Publication US 6 568 484 B1 describes a pneumatic percussive mechanism for a percussion drill and/or a drill hammer. The mechanism comprises, housed in the housing of the percussive mechanism, an axially reciprocating percussion piston. A drive piston is axially reciprocated in a guide cylinder of said percussion piston. The guide cylinder is provided on its inner face with one or more air compensation pockets. At least one idle opening extends through the guide cylinder. In the percussive action, the idle opening does not communicate with the ambience while in the idle mode the idle opening can be displaced via an idle channel that leads to the ambience and thus connects a cavity that receives a pneumatic piston with the ambience by way of the idle opening. The air compensation pockets and the idle openings allow an optimization of the piston return behavior and of the idle operation of the percussive mechanism.

Publication US 2017/282343 A1 describes a powered hammer assembly that comprises:
a housing, a power cell that includes a piston, and a locking valve body assembly that comprises: a valve body that defines a void configured to contain a pressurized fluid, a locking member that is configured to be biased by pressurized fluid into a locking configuration, and a retainer member. The housing defines a first aperture that is configured to receive the locking member, and the housing further defines a retaining slot that is configured to receive the retainer member.

Publication WO 2019/068958 A1 discloses a hammer device with a frame attachable to a working machine. The hammer device comprising a linear electric machine having a mover.

### Summary

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In accordance with the invention, there is provided a new hammer device that is connectable to e.g. an excavator or another working machine. A working machine, such as e.g. an excavator, is typically called an off-road machine. However, to emphasize that an ability for off-road operation is possible but not necessary, the broader term "working machine" is used in this document. A hammer device according to the invention comprises:
- a frame attachable to a working machine, the frame comprising attachment members configured to attach to the working machine so that the frame is nondestructively detachable from the working machine,
- an actuator member linearly movably supported with respect to the frame,
- a linear electric machine comprising a mover configured to direct impacts to the actuator member and a stator connected to the frame and provided with windings configured to generate a magnetic force directed to the mover in response to electric current supplied to the windings, and
- a brake configured to brake movement of the mover of the linear electric machine.

The brake of the hammer device comprises:
- a frame structure,
- an annular element linearly movable with respect to the frame structure, the annular element constituting a wall of an annular chamber for damper fluid e.g. oil,
- a center element surrounded by the annular element and linearly movable with respect to the frame structure and the annular element, and
- a spring configured to move the annular element with respect to the frame structure in a first direction in which the volume of the annular chamber is increasing.

The above-mentioned center element comprises a collar configured to abut to a contact portion of the annular element and to move the annular element together with the center element in a second direction opposite to the first direction and against a spring force of the spring. A portion of the annular element surrounding the contact portion comprises apertures configured to conduct the damper fluid to flow to and from the annular chamber. The above-mentioned spring is a plate spring, i.e. a disc spring, configured to gradually close the apertures in response to a situation in which the annular element is moved in the second direction against the spring force, where a plate of the spring gets gradually parallel with a surface of the annular element around the apertures in response to a situation in which the spring is compressed.

When the above-mentioned plate of the spring gets gradually parallel with the surface of the annular element around the apertures, an ability of the plate to inhibit a flow of the damper fluid via the apertures gradually increases and thereby the braking force increases along with a linear movement. Thus, there is no need for separate valves for controlling the flow of the damper fluid.

In a hammer device according to an exemplifying and non-limiting embodiment, the mover of the linear electric machine is the center element of the brake. In a hammer device according to another exemplifying and non-limiting embodiment, the actuator member is the center element of the brake.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of un-recited features.

The features recited in dependent claims are mutually freely combinable unless otherwise explicitly stated. Furthermore, it is to be understood that the use of "a" or "an", i.e. a singular form, throughout this document does not exclude a plurality.

### Brief description of the drawings

Exemplifying and non-limiting embodiments and their advantages are explained in greater detail below in the sense of examples and with reference to the accompanying drawings, in which:
figure 1 illustrates a brake of a hammer device according to an exemplifying and non-limiting embodiment,
figure 2 illustrates a brake of a hammer device according to an exemplifying and non-limiting embodiment,
figures 3a, 3b, 3c, 3d, 3e, and 3f illustrate a hammer device according to an exemplifying and non-limiting embodiment, and
figure 4 illustrates a hammer device according to an exemplifying and non-limiting embodiment.

### Description of exemplifying and non-limiting embodiments

The invention and the embodiments thereof are not limited to the exemplifying and non-limiting embodiments described below. Thus, the specific examples provided in the description given below should not be construed as limiting the scope and/or the applicability of the appended claims. Lists and groups of examples provided in the description given below are not exhaustive unless otherwise explicitly stated.

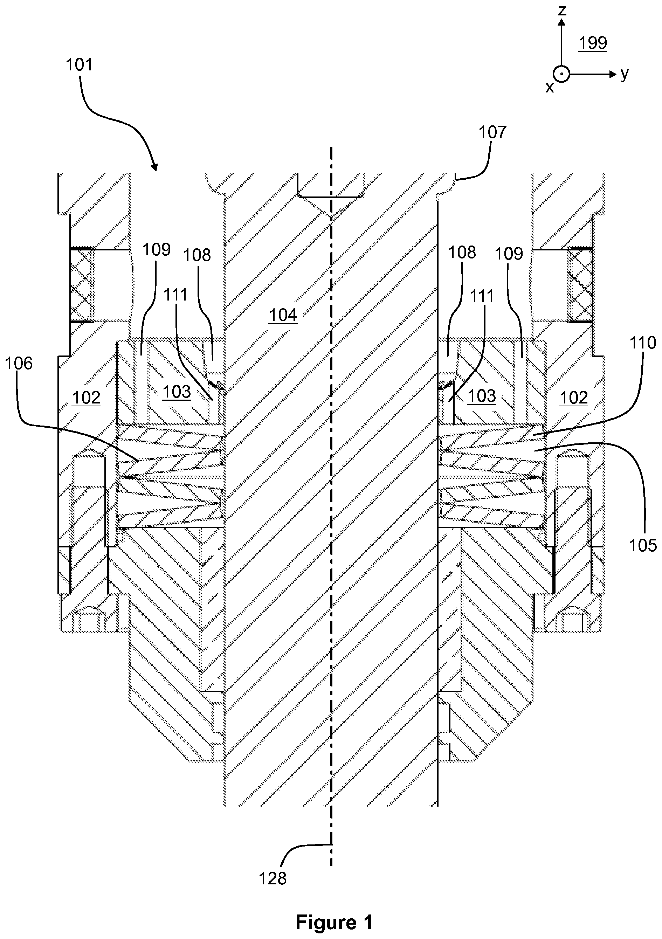

Figure 1 shows a section view of a brake 101 of a hammer device according to an exemplifying and non-limiting embodiment. The geometric section plane is parallel with the geometric yz-plane of the coordinate system 199. The brake 101 comprises a frame structure 102 and an annular element 103 that is linearly movable with respect to the frame structure 102. The brake 101 comprises a center element 104 that is surrounded by the annular element 103 and linearly movable with respect to the frame structure 102 and the annular element 103. The frame structure 102, the annular element 103, and the center element 104 constitute an annular chamber 105 for damper fluid e.g. oil. The center element 104 can be for example rotationally symmetric with respect to geometric line 128. It is however also possible that the center element 104 has a non-circular cross-sectional shape. The brake 101 comprises a spring 106 configured to move the annular element 103 with respect to the frame structure 102 in a first direction, i.e. in the positive z-direction of the coordinate system 199, in which the volume of the annular chamber 105 is increasing. The center element 104 comprises a collar 107 configured to abut to a contact portion 108 of the annular element 103 and to move the annular element 103 together with the center element 104 in a second direction, i.e. in the negative z-direction of the coordinate system 199, opposite to the first direction and against the spring force of the spring 106. A portion of the annular element 103 surrounding the contact portion 108 comprises apertures 109 configured to conduct the damper fluid to and from the annular chamber 105. The spring 106 is a plate spring configured to gradually close the apertures 109 in response to a situation in which the annular element 103 is moved in the second direction against the spring force, i.e. in the negative z-direction of the coordinate system 199. A plate 110 of the spring 106 gets gradually parallel with a surface of the annular element 103 around the apertures 109 in response to a situation in which the spring 106 is compressed. When the plate 110 of the spring 106 gets gradually parallel with the surface of the annular element 103 around the apertures 109, an ability of the plate 110 to inhibit a flow of the damper fluid via the apertures 109 gradually increases and thereby the braking force increases along with a linear movement in the negative z-direction of the coordinate system 199. Thus, there is no need for separate valves for controlling the flow of the damper fluid.

In the exemplifying brake 101 illustrated in figure 1, the contact portion 108 of the annular element 103 comprises other apertures 111 which are configured to be closed by the collar 107 of the center element 104 in response to a situation in which the collar 107 moves the annular element 103 in the second direction in which the volume of the annular chamber 105 is decreasing. The apertures 111 are configured to conduct the damper fluid into the annular chamber 105 in response to a situation in which the collar 107 is a distance away from the contact portion 108 and the spring 106 moves the annular element 103 in the first direction in which the volume of the annular chamber 105 is increasing. Thus, the apertures 111 do not reduce the braking force since they are closed by the collar 107 when the collar 107 moves the annular element 103 in the second direction. On the other hand, the apertures 111 allow the damper fluid to flow into the annular chamber 105 when the collar 107 is a distance away from the contact portion 108. Thus, the apertures 111 make the brake 101 faster to recover into a position in which the spring 106 is not compressed and the brake 101 is ready to operate.

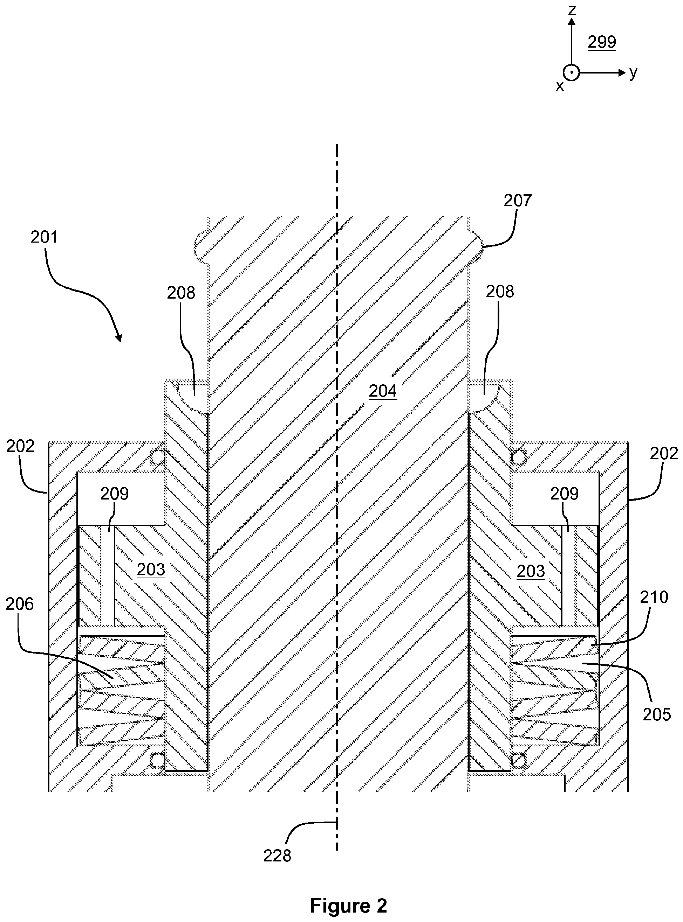

Figure 2 shows a section view of a brake 201 of a hammer device according to an exemplifying and non-limiting embodiment. The geometric section plane is parallel with the geometric yz-plane of the coordinate system 299. The brake 201 comprises a frame structure 202 and an annular element 203 that is linearly movable with respect to the frame structure 202. The brake 201 comprises a center element 204 that is surrounded by the annular element 203 and linearly movable with respect to the frame structure 202 and the annular element 203. The annular element 203 constitutes a wall of an annular chamber 205 for damper fluid e.g. oil. The center element 204 can be for example rotationally symmetric with respect to geometric line 228. It is however also possible that the center element 204 has a non-circular cross-sectional shape. The brake 201 comprises a spring 206 configured to move the annular element 203 with respect to the frame structure 202 in a first direction, i.e. in the positive z-direction of the coordinate system 299, in which the volume of the annular chamber 205 is increasing. The center element 204 comprises a collar 207 configured to abut to a contact portion 208 of the annular element 203 and to move the annular element 203 together with the center element 204 in a second direction, i.e. in the negative z-direction of the coordinate system 299, opposite to the first direction and against a spring force of the spring 206. A portion of the annular element 203 surrounding the contact portion 208 comprises apertures 209 configured to conduct the damper fluid to and from the annular chamber 205. The spring 206 is a plate spring configured to gradually close the apertures 209 in response to a situation in which the annular element 203 is moved in the second direction against the spring force. A plate 210 of the spring 206 gets gradually parallel with a surface of the annular element 203 around the apertures 209 when the spring 206 is compressed. When the plate 210 of the spring 206 gets gradually parallel with the surface of the annular element 203 around the apertures 209, an ability of the plate 210 to inhibit a flow of the damper fluid via the apertures 209 gradually increases and thereby the braking force increases along with a linear movement in the negative z-direction of the coordinate system 299.

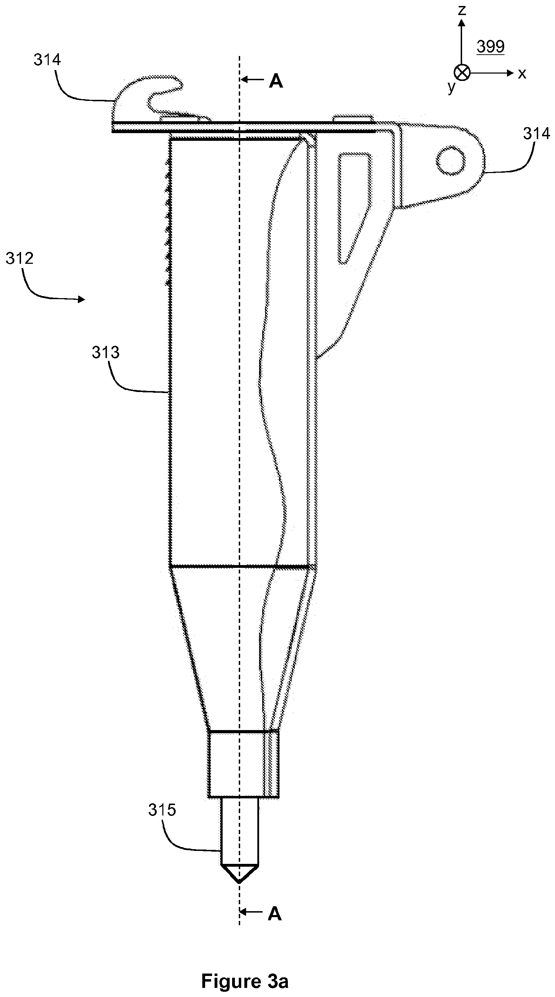

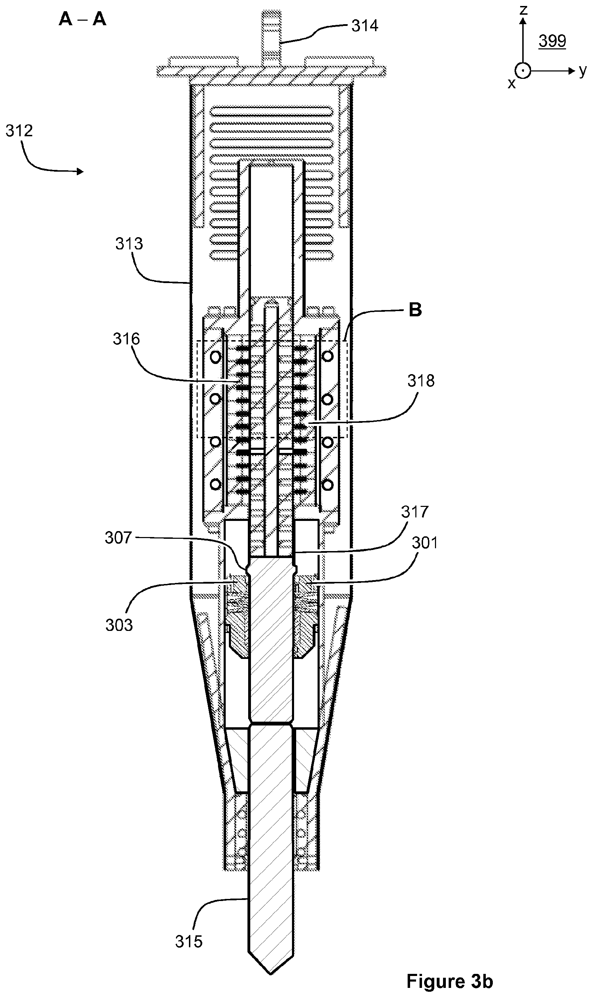

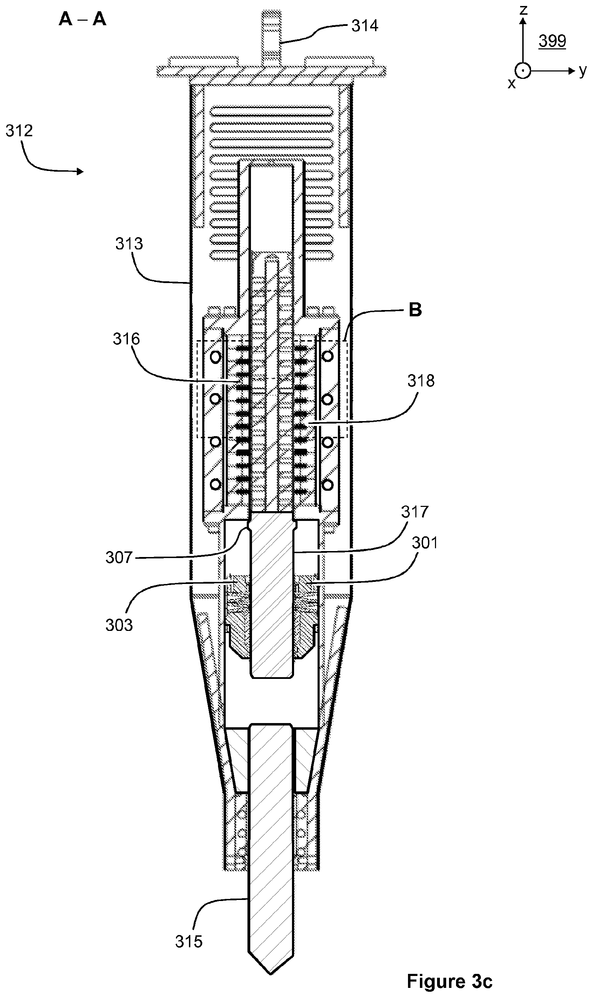

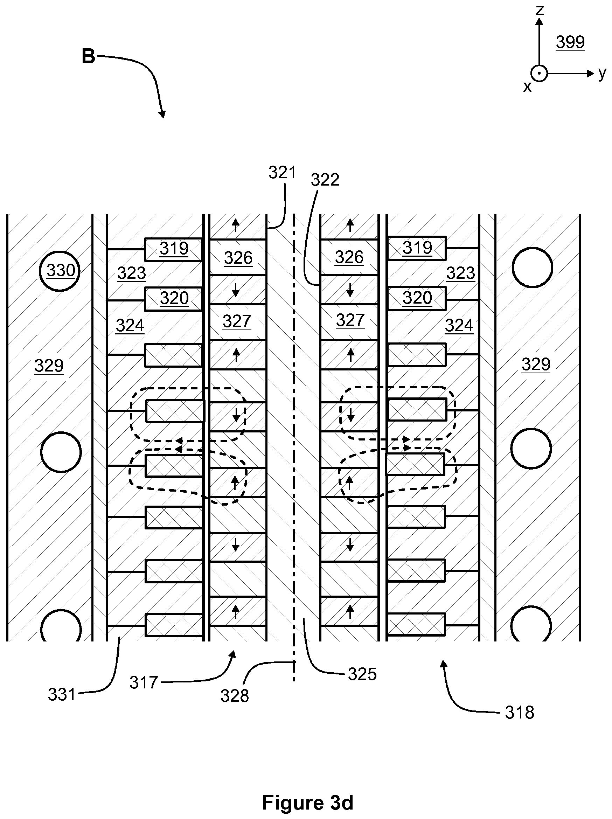

Figure 3a shows a hammer device 312 according to an exemplifying and non-limiting embodiment. Figures 3b and 3c show section views taken along a line A-A shown in Figure 3a in two different situations. The geometric section plane is parallel with the yz-plane of a coordinate system 399. Figure 3d shows a magnification of a part B of figures 3b and 3c. The hammer device 312 comprises a frame 313 attachable to a working machine, e.g. such as to the boom of an excavator in place of a bucket. The frame 313 comprises attachment members 314 for attaching to the working machine so that the frame is nondestructively detachable from the working machine. The hammer device 312 comprises an actuator member 315, e.g. a chisel, linearly movably supported by the frame 313. An end of the actuator member 315 is shaped to constitute a tip for breaking material e.g. stone or concrete.

The hammer device 312 comprises a linear electric machine 316 having a mover 317 and a stator 318. The mover 317 is configured to direct impacts to the actuator member 315 in the negative z-direction of the coordinate system 399. Figure 3b shows a situation in which the mover 317 is in its lowest position and in contact with the actuator member 315. Figure 3c shows a situation in which the mover 317 is in an upper position. The stator 318 is attached to the frame 313 and comprises windings for generating a magnetic force directed to the mover 317 in response to electric current supplied to the windings. The windings may constitute for example a multi-phase winding, e.g. a two- or three-phase winding. In the exemplifying hammer device 312 illustrated in figures 3a-3d, the linear electric machine 316 is a tubular linear electric machine in which the conductor coils of the windings are configured to surround the mover 317. Figures 3b, 3c, and 3d show cross-sectional views of the conductor coils of the windings. In figures 3b and 3c, the cross-sections of the conductor coils are depicted by black rectangular patterns. In figure 3d, two of the conductor coils of the windings are denoted with references 319 and 320. The mover 317 can be, for example, substantially rotationally symmetric with respect to a geometric line 328 shown in figure 3d.

The hammer device 312 comprises a brake 301 according to an exemplifying and non-limiting embodiment of the invention. The brake 301 can be for example like the brake 101 illustrated in figure 1. In this exemplifying hammer device 312, the mover 317 of the linear electric machine 316 is the center element of the brake 301. The brake 301 inhibits a linear movement of the mover 317 in the negative z-direction of the coordinate system 399 when a collar 307 of the mover 317 is in contact with an annular element 303 of the brake 301.

In the exemplifying hammer device 312 illustrated in figures 3a-3d, the mover 317 comprises annular permanent magnets provided one after another in the longitudinal direction of the mover 317, i.e. in the direction of the z-axis of the coordinate system 399. The axial direction of the annular shape of each permanent magnet coincides with the longitudinal direction of the mover 317. In figure 3d, two of the annular permanent magnets are denoted with references 321 and 322. The magnetizing directions of the permanent magnets coincide with the longitudinal direction of the mover 317, and the magnetizing directions of successive permanent magnets are opposite to each other. The magnetizing directions of the permanent magnets are indicated with arrows in figure 3d. Exemplifying magnetic flux lines are depicted with dashed lines. In this exemplifying case, the mover 317 comprises a center rod 325 and annular ferromagnetic elements provided around the center rod 325 to form a ferromagnetic core structure of the mover 317. In figure 3d, two of the annular ferromagnetic elements of the mover 317 are denoted with references 326 and 327. As shown in figure 3d, each annular permanent magnet is situated between two successive annular ferromagnetic elements.

Advantageously, the center rod 325 of the mover 317 is made of non-ferromagnetic material in order to maximize a magnetic coupling between the permanent magnets and the windings of the stator 318, i.e. to minimize a leakage flux via the center rod 325. The center rod 325 can be made of for example austenitic steel or some other suitable non-ferromagnetic and sufficiently strong material.

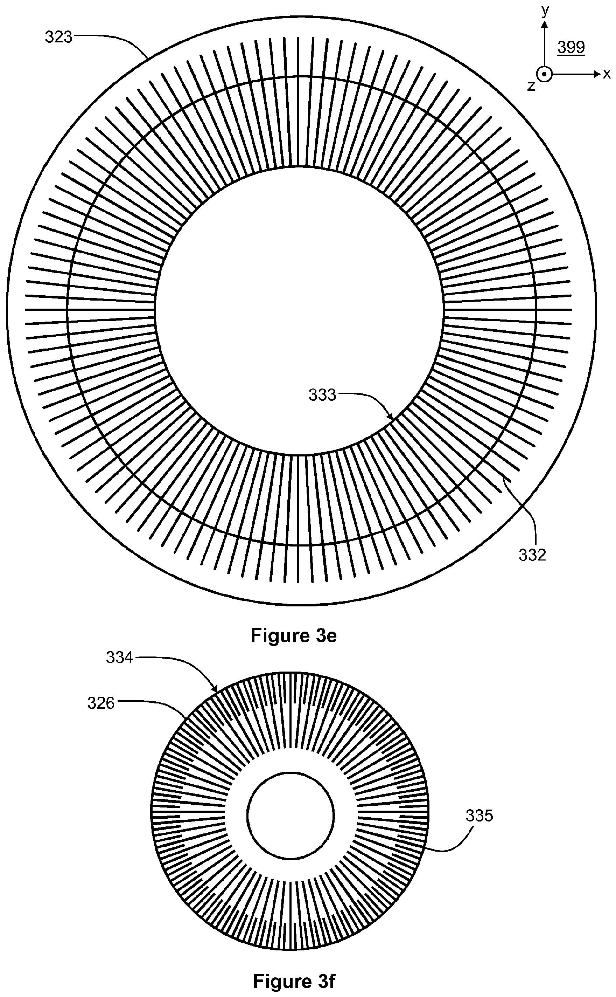

In a hammer device according to an exemplifying and non-limiting embodiment, the above-mentioned annular ferromagnetic elements of the mover 317 are made of solid steel and provided with slits extending from an air-gap surface of the mover towards, but without reaching, a surface of a yoke section of a ferromagnetic core-structure of the mover and extending longitudinally through the annular ferromagnetic elements. Figure 3f shows the annular ferromagnetic element 326 when seen along the negative z-direction of the coordinate system 399. In figure 3f, one of the slits is denoted with a reference 335 and the air-gap surface of the mover is denoted with a reference 334. The solid steel provided with the slits emulates a laminated structure and thus eddy currents induced in the ferromagnetic core-structure are reduced. Despite the slits, each annular ferromagnetic element is a single piece of material since the slits do not reach the surface of the annular ferromagnetic element constituting a part of the surface of the above-mentioned yoke section. The strongest magnetic flux variations take place near the airgap and thus the slits are more important in areas near the airgap than in areas near the surface of the yoke section.

In a hammer device according to an exemplifying and non-limiting embodiment, the above-mentioned slits are filled with electrically insulating solid material that can be for example resin. The electrically insulating solid material in the slits can be useful e.g. for dampening vibrations of the steel portions between the slits.

In a hammer device according to an exemplifying and non-limiting embodiment, the slits of the annular ferromagnetic elements of the mover comprise first slits and second slits so that the first slits are shorter in a radial direction than the second slits. In the exemplifying case illustrated in figure 3f, an angle between adjacent slits is 2.5 degrees on the area where there are both the longer slits and the shorter slits and an angle between adjacent slits is 5 degrees on the area where there are only the longer slits.

It is to be noted that hammer devices according to exemplifying and non-limiting embodiments may have different ferromagnetic core structures of the mover, and thus hammer devices according to exemplifying and non-limiting embodiments are not limited to any specific ferromagnetic core structures of the mover.

In the exemplifying hammer device 312 illustrated in figures 3a-3d, the ferromagnetic core structure (331) of the stator 318 comprises annular ferromagnetic elements which surround the mover 317 and which are stacked one after another in the longitudinal direction of the mover and form slots for conductor coils of the stator windings. In figure 3d, two of the annular ferromagnetic elements of the stator 318 are denoted with references 323 and 324. An exemplifying way of implementing the windings of the stator 318 is that each slot is provided with only one conductor coil belonging to one phase of the windings. It is also possible to provide each slot, for example, with two conductor coils belonging either to a same phase of the windings or to two different phases of the windings. The stator 318 comprises also a stator frame 329 having cooling channels for conducting cooling fluid, e.g. water or air. In figure 3d, one of the cooling channels is denoted with a reference 330.

In a hammer device according to an exemplifying and non-limiting embodiment, the above-mentioned annular ferromagnetic elements of the stator 318 are made of solid steel and provided with slits extending from an air-gap surface of the stator towards, but without reaching, a surface of a yoke section of the ferromagnetic core-structure and extending longitudinally through the annular ferromagnetic elements. Figure 3e shows the annular ferromagnetic element 323 when seen along the negative z-direction of the coordinate system 399. In figure 3e, one of the slits is denoted with a reference 332 and the air-gap surface of the stator is denoted with a reference 333. The solid steel provided with the slits emulates a laminated structure and thus eddy currents induced in the ferromagnetic core-structure are reduced. Despite the slits, each annular ferromagnetic element is a single piece of material since the slits do not reach the surface of the annular ferromagnetic element constituting a part of the surface of the above-mentioned yoke section. The strongest magnetic flux variations take place near the airgap and thus the slits are more important in areas near the airgap than in areas near the surface of the yoke section.

In a hammer device according to an exemplifying and non-limiting embodiment, the above-mentioned slits are filled with electrically insulating solid material that can be for example resin. The electrically insulating solid material in the slits can be useful e.g. for dampening vibrations of the steel portions between the slits.

It is to be noted that hammer devices according to exemplifying and non-limiting embodiments may have different ferromagnetic core structures of the stator, and thus hammer devices according to exemplifying and non-limiting embodiments are not limited to any specific ferromagnetic core structures of the stator.

The mover 317 can be moved in a controlled way for example with a power electronic converter coupled to the windings of the stator 318. In many cases, it is advantageous for the control by the power electronic converter to know the position of the mover 317 with respect to the stator 318. For example, the position of the mover 317 can be measured with a mechanical position sensor comprising a sensor rod fixed to the mover. The position of the mover 317 can be measured also in a contactless way, for example with a laser measurement arrangement. It is also possible to provide the mover 317 and the stator 318 with structures operable as an inductive or capacitive position sensor. Hammer devices according to certain embodiments may comprise any suitable means for position measurement and/or estimation, and hammer devices according to other embodiments can be without any means for position measurement and/or estimation.

It is to be noted that hammer devices according to embodiments of the invention are not limited to any specific type of a linear electric machine. For example, the linear electric machine of a hammer device according to an exemplifying and non-limiting embodiment can be a flux switching permanent magnet synchronous machine "FSPMSM" where permanent magnets are located in a stator. It is also possible that a hammer device according to an exemplifying and non-limiting embodiment comprises a reluctance linear electric machine in which no permanent magnets are needed. In a reluctance linear electric machine, all magnetic flux is produced by electric currents and the magnetic force directed to the mover is generated by reluctance variation based on the design of the mover. In comparison to a permanent magnet machine, the drawbacks of a reluctance machine are lower power density, i.e. a larger machine is needed to produce the same power, and lower efficiency because all magnetic flux is produced by electric currents, resulting in higher resistive I²R losses in the electric machine, and, in addition, higher losses in the power electronics feeding the electric machine.

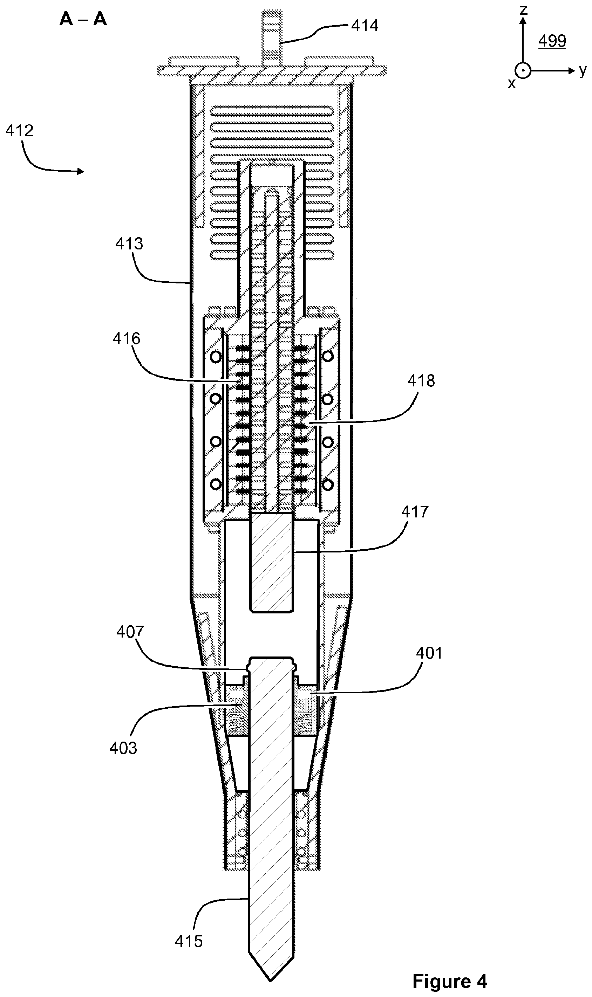

Figure 4 shows a section view of a hammer device 412 according to an exemplifying and non-limiting embodiment. The geometric section plane is parallel with the yz-plane of a coordinate system 499. The hammer device 412 comprises a frame 413 attachable to a working machine. The frame 413 comprises attachment members 414 for attaching to the working machine so that the frame is nondestructively detachable from the working machine. The hammer device 412 comprises an actuator member 415, e.g. a chisel, linearly movably supported by the frame 413. An end of the actuator member 415 is shaped to constitute a tip for breaking material e.g. stone or concrete. The hammer device 412 comprises a linear electric machine 416 having a mover 417 and a stator 418. The mover 417 is configured to direct impacts to the actuator member 415 in the negative z-direction of the coordinate system 499. The stator 418 is attached to the frame 413 and comprises windings for generating a magnetic force directed to the mover 417 in response to electric current supplied to the windings. The windings may constitute for example a multi-phase winding, e.g. a two- or three-phase winding.

The hammer device 412 comprises a brake 401 according to an exemplifying and non-limiting embodiment of the invention. The brake 401 can be for example like the brake 201 illustrated in figure 2. In this exemplifying hammer device 412, the actuator member 415 is the center element of the brake 401. The brake 401 inhibits a linear movement of the actuator member 415 in the negative z-direction of the coordinate system 499 when a collar 407 of the actuator member 415 is in contact with an annular element 403 of the brake 401.

The invention and the embodiments thereof are not limited to the exemplifying and non-limiting embodiments described above. Thus, the specific examples provided in the description given above should not be construed as limiting the scope and/or the applicability of the appended claims. Lists and groups of examples provided in the description given above are not exhaustive unless otherwise explicitly stated.

## Claims

1. A hammer device (312, 412) comprising:
- a frame (313, 412) attachable to a working machine, the frame comprising attachment members (314, 414) configured to attach to the working machine so that the frame is nondestructively detachable from the working machine,
- an actuator member (315, 415) linearly movably supported with respect to the frame, and
- a linear electric machine (316, 416) comprising a mover (317, 417) configured to direct impacts to the actuator member and a stator (318, 418) connected to the frame and provided with windings configured to generate a magnetic force directed to the mover in response to electric current supplied to the windings,
the hammer device (312, 312) being **characterized in that** it further comprises a brake (301, 401) configured to brake movement of the mover of the linear electric machine,
wherein the brake comprises:
- a frame structure (102, 202),
- an annular element (103, 203) linearly movable with respect to the frame structure, the annular element constituting a wall of an annular chamber (105, 205) for damper fluid,
- a center element (104, 204) surrounded by the annular element and linearly movable with respect to the frame structure and the annular element, and
- a spring (106, 206) configured to move the annular element with respect to the frame structure in a first direction (+z) in which a volume of the annular chamber is increasing,
wherein the center element comprises a collar (107, 207) configured to abut to a contact portion (108, 208) of the annular element and to move the annular element together with the center element in a second direction (-z) opposite to the first direction and against a spring force of the spring, and a portion of the annular element surrounding the contact portion comprises apertures (109, 209) configured to conduct the damper fluid to flow to and from the annular chamber, wherein the spring is a plate spring configured to gradually close the apertures in response to a situation in which the annular element is moved in the second direction against the spring force, a plate (110, 210) of the spring getting gradually parallel with a surface of the annular element around the apertures in response to a situation in which the spring is compressed.

2. A hammer device according to claim 1, wherein the contact portion of the annular element comprises other apertures (111) configured to be closed by the collar (107) of the center element in response to a situation in which the collar of the center element moves the annular element in the second direction in which the volume of the annular chamber is decreasing, and to conduct the damper fluid into the annular chamber in response to a situation in which the collar of the center element is a distance away from the contact portion and the spring moves the annular element in the first direction.

3. A hammer device according to claim 1 or 2, wherein the mover (317) of the linear electric machine is the center element of the brake (301).

4. A hammer device according to claim 1 or 2, wherein the actuator member (415) is the center element of the brake (401).

5. A hammer device according to any one of claims 1-4, wherein the linear electric machine (316, 416) is a tubular linear electric machine in which conductor coils (319, 320) of the windings are configured to surround the mover (317).

6. A hammer device according to claim 5, wherein the mover (317) comprises annular permanent magnets (321, 322) provided one after another in a longitudinal direction of the mover, an axial direction of an annular shape of each of the annular permanent magnets coinciding with the longitudinal direction of the mover, and magnetizing directions of the annular permanent magnets coinciding with the longitudinal direction of the mover so that the magnetizing directions of successive ones of the annular permanent magnets are opposite to each other.

7. A hammer device according to claim 5 or 6, wherein a ferromagnetic core structure (331) of the stator (318) comprises annular ferromagnetic elements (323, 324) successive in a longitudinal direction, surrounding the mover, and forming slots for conductor coils of the windings.

8. A hammer device according to claim 7, wherein the annular ferromagnetic elements (323, 324) of the stator (318) are made of solid steel and provided with slits (332) extending from an air-gap surface (333) of the stator towards, but without reaching, a surface of a yoke section of the ferromagnetic core-structure of the stator and extending longitudinally through the annular ferromagnetic elements of the stator so as to reduce eddy currents induced in the ferromagnetic core-structure of the stator.

9. A hammer device according to claim 8, wherein the slits of the annular ferromagnetic elements (323, 324) of the stator are filled with electrically insulating solid material.

10. A hammer device according to any one of claims 1-9, wherein the mover (317) comprises a center rod (325) made of non-ferromagnetic material and annular ferromagnetic elements (326, 327) around the center rod and forming a ferromagnetic core structure of the mover.

11. A hammer device according to claim 10, wherein the annular ferromagnetic elements (326, 327) of the mover (317) are made of solid steel and provided with slits (335) extending from an air-gap surface (334) of the mover towards, but without reaching, a surface of a yoke section of a ferromagnetic core-structure of the mover and extending longitudinally through the annular ferromagnetic elements of the mover so as to reduce eddy currents induced in the annular ferromagnetic elements of the mover.

12. A hammer device according to claim 11, wherein the slits of the annular ferromagnetic elements (326, 327) of the mover are filled with electrically insulating solid material.

13. A hammer device according to claim 11 or 12, wherein the slits of the annular ferromagnetic elements (326, 327) of the mover comprise first slits and second slits so that the first slits are shorter in a radial direction than the second slits.

14. A hammer device according to any one of claims 1-13, wherein the stator (318) comprises a stator frame (329) surrounding the ferromagnetic core-structure (331) of the stator and comprising cooling channels (330) for conducting cooling fluid.

## Patentansprüche

1. Hammervorrichtung (312, 412), die Folgendes umfasst:
- einen Rahmen (312, 412), der an einer Arbeitsmaschine befestigt werden kann, wobei der Rahmen Befestigungselemente (314, 414) umfasst, die dafür konfiguriert sind, sich an der Arbeitsmaschine zu befestigen, so dass der Rahmen zerstörungsfrei von der Arbeitsmaschine abnehmbar ist,
- ein Betätigungselement (315, 415), das linear beweglich in Bezug auf den Rahmen getragen wird, und
- eine lineare elektrische Maschine (316, 416), die ein Bewegungselement (317, 417), das dafür konfiguriert ist, Stöße auf das Betätigungselement zu richten, und einen Stator (318, 418), der mit dem Rahmen verbunden und mit Wicklungen versehen ist, die dafür konfiguriert sind, als Reaktion auf einen elektrischen Strom, der den Wicklungen zugeführt wird, eine magnetische Kraft zu erzeugen, die zu dem Bewegungselement gerichtet ist, umfasst,
wobei die Hammervorrichtung (312, 412) **dadurch gekennzeichnet ist, dass** sie ferner eine Bremse (301, 401) umfasst, die dafür konfiguriert ist, eine Bewegung de der linearen elektrischen Maschine zu bremsen,
wobei die Bremse Folgendes umfasst:
- eine Rahmenstruktur (102, 202),
- ein ringförmiges Element (103, 203), das linear in Bezug auf die Rahmenstruktur beweglich ist, wobei das ringförmige Element eine Wand einer ringförmigen Kammer (105, 205) für ein Dämpferfluid darstellt,
- ein Mittenelement (104, 204), das von dem ringförmigen Element umgeben und linear in Bezug auf die Rahmenstruktur und das ringförmige Element beweglich ist, und
- eine Feder (106, 206), die dafür konfiguriert ist, das ringförmige Element in Bezug auf die Rahmenstruktur in einer ersten Richtung (+z), in der ein Volumen der ringförmigen Kammer zunimmt, zu bewegen,
wobei das Mittenelement einen Bund (107, 207) umfasst, der dafür konfiguriert ist, an einen Kontaktabschnitt (108, 208) des ringförmigen Elements anzustoßen und das ringförmige Element zusammen mit dem Mittenelement in einer zweiten Richtung (-z), entgegengesetzt zu der ersten Richtung, und gegen eine Federkraft der Feder zu bewegen, und ein Abschnitt des ringförmigen Elements, der den Kontaktabschnitt umgibt, Öffnungen (109, 209) umfasst, die dafür konfiguriert sind, das Dämpferfluid zu leiten, damit es zu und von der ringförmigen Kammer strömt, wobei die Feder eine Tellerfeder ist, die dafür konfiguriert ist, als Reaktion auf eine Situation, in der das ringförmige Element gegen die Federkraft in der zweiten Richtung bewegt wird, allmählich die Öffnungen zu schließen, wobei ein Teller (110, 210) der Feder als Reaktion auf eine Situation, in der die Feder zusammengedrückt wird, allmählich parallel zu einer Oberfläche des ringförmigen Elements um die Öffnungen wird.

2. Hammervorrichtung nach Anspruch 1, wobei der Kontaktabschnitt des ringförmigen Elements andere Öffnungen (111) umfasst, die dafür konfiguriert sind, als Reaktion auf eine Situation, in welcher der Bund des Mittenelements das ringförmige Element in der zweiten Richtung, in der das Volumen der ringförmigen Kammer abnimmt, bewegt, durch den Bund (107) des Mittenelements geschlossen zu werden und als Reaktion auf eine Situation, in der sich der Bund des Mittenelements in einer Entfernung weg von dem Kontaktabschnitt befindet und die Feder das ringförmige Element in der ersten Richtung bewegt, das Dämpferfluid in die ringförmige Kammer zu leiten.

3. Hammervorrichtung nach Anspruch 1 oder 2, wobei das Bewegungselement (317) der linearen elektrischen Maschine das Mittenelement der Bremse (301) ist.

4. Hammervorrichtung nach Anspruch 1 oder 2, wobei das Betätigungselement (415) das Mittenelement der Bremse (401) ist.

5. Hammervorrichtung nach einem der Ansprüche 1 bis 4, wobei die lineare elektrische Maschine (316, 416) eine röhrenförmige lineare elektrische Maschine ist, in der Leiterspulen (319, 320) der Wicklungen dafür konfiguriert sind, das Bewegungselement (317) zu umgeben.

6. Hammervorrichtung nach Anspruch 5, wobei das Bewegungselement (317) ringförmige Dauermagneten (321, 322) umfasst, die hintereinander in einer Längsrichtung des Bewegungselements bereitgestellt werden, eine axiale Richtung einer ringförmigen Gestalt jedes von den ringförmigen Dauermagneten mit der Längsrichtung des Bewegungselements übereinstimmt und Magnetisierungsrichtungen der ringförmigen Dauermagneten so mit der Längsrichtung des Bewegungselements übereinstimmen, dass die Magnetisierungsrichtungen von aufeinanderfolgenden der ringförmigen Dauermagneten zueinander entgegengesetzt sind.

7. Hammervorrichtung nach Anspruch 5 oder 6, wobei eine ferromagnetische Kernstruktur (331) des Stators (318) ringförmige ferromagnetische Elemente (323, 324) aufeinanderfolgend in einer Längsrichtung umfasst, die das Bewegungselement umgeben und Nuten für Leiterspulen der Wicklungen bilden.

8. Hammervorrichtung nach Anspruch 7, wobei die ringförmigen ferromagnetischen Elemente (323, 324) des Stators (318) aus massivem Stahl hergestellt sind und mit Schlitzen (332) versehen sind, die sich von einer Luftspalt-Oberfläche (333) des Stators aus hin zu einer Jochstruktur der ferromagnetischen Kernstruktur des Stators erstrecken, aber ohne sie zu erreichen, und sich in Längsrichtung durch die ringförmigen ferromagnetischen Elemente des Stators erstrecken, um so Wirbelströme zu verringern, die in der ferromagnetischen Kernstruktur des Stators induziert werden.

9. Hammervorrichtung nach Anspruch 8, wobei die Schlitze der ringförmigen ferromagnetischen Elemente (323, 324) des Stators mit elektrisch isolierendem massivem Material gefüllt sind.

10. Hammervorrichtung nach einem der Ansprüche 1 bis 9, wobei das Bewegungselement (317) einen Mittenstab (325), der aus nicht-ferromagnetischem Material hergestellt ist, und ringförmige ferromagnetische Elemente (326, 327) um den Mittenstab und eine ferromagnetische Kernstruktur des Bewegungselements bildend umfasst.

11. Hammervorrichtung nach Anspruch 10, wobei die ringförmigen ferromagnetischen Elemente (326, 327) des Bewegungselements (317) aus massivem Stahl hergestellt sind und mit Schlitzen (335) versehen sind, die sich von einer Luftspalt-Oberfläche (334) des Bewegungselements aus hin zu einer Jochstruktur der ferromagnetischen Kernstruktur des Bewegungselements erstrecken, aber ohne sie zu erreichen, und sich in Längsrichtung durch die ringförmigen ferromagnetischen Elemente des Bewegungselements erstrecken, um so Wirbelströme zu verringern, die in der ferromagnetischen Kernstruktur des Bewegungselements induziert werden.

12. Hammervorrichtung nach Anspruch 11, wobei die Schlitze der ringförmigen ferromagnetischen Elemente (326, 327) des Bewegungselements mit elektrisch isolierendem massivem Material gefüllt sind.

13. Hammervorrichtung nach Anspruch 11 oder 12, wobei die Schlitze der ringförmigen ferromagnetischen Elemente (326, 327) des Bewegungselements erste Schlitze und zweite Schlitze so umfassen, dass die ersten Schlitze in einer radialen Richtung kürzer sind als die zweiten Schlitze.

14. Hammervorrichtung nach einem der Ansprüche 1 bis 13, wobei der Stator (318) einen Statorrahmen (329) umfasst, der die ferromagnetische Kernstruktur (331) des Stators umgibt und Kühlkanäle (330) zum Leiten eines Kühlfluids umfasst.

## Revendications

1. Dispositif de marteau (312, 412) comprenant :
- un châssis (313, 412) pouvant être fixé à une machine de travail, le châssis comprenant des éléments de fixation (314, 414) configurés pour se fixer à la machine de travail de manière à pouvoirdétacher le châssis de la machine de façon non destructive,
- un élément d'actionnement (315, 415) supporté de manière mobile linéairement par rapport au châssis, et
- une machine électrique linéaire (316, 416) comprenant un organe moteur (317, 417) configuré pour diriger les impacts vers l'élément d'actionnement et un stator (318, 418) raccordé au châssis et pourvu d'enroulements configurés pour générer une force magnétique dirigée vers le moteur en réponse au courant électrique qui alimente les enroulements,
le dispositif de marteau (312, 312) est **caractérisé en ce qu'**il comprend en outre
- un frein (301, 401) configuré pour freiner le mouvement de l'organe moteur de la machine électrique linéaire
dans lequel le frein comprend :
- une structure de cadre (102, 202),
- un élément annulaire (103, 203) mobile linéairement par rapport à la structure de cadre, l'élément annulaire constituant une paroi d'une chambre annulaire (105, 205) pour un fluide d'amortissement,
- un élément central (104, 204) entouré par l'élément annulaire et mobile linéairement par rapport à la structure de cadre et à l'élément annulaire et
- un ressort (106, 206) configuré pour déplacer l'élément annulaire par rapport à la structure de cadre dans une première direction (+z) dans laquelle un volume de la chambre annulaire augmente,
dans lequel l'élément central comprend un collier (107, 207) configuré pour buter contre une partie de contact (108, 208) de l'élément annulaire et pour déplacer l'élément annulaire avec l'élément central dans une deuxième direction (-z) opposée à la première direction et à l'opposé d'une force du ressort et une partie de l'élément annulaire entourant la partie de contact comprend des ouvertures (109, 209) configurées pour conduire le fluide amortisseur vers et depuis la chambre annulaire, dans lequel le ressort est un ressort à lame configuré pour fermer progressivement les ouvertures en réponse à une situation dans laquelle l'élément annulaire est déplacé dans la deuxième direction à l'opposé de la force du ressort, une lame (110, 210) du ressort devenant progressivement parallèle à une surface de l'élément annulaire autour des ouvertures en réponse à une situation dans laquelle le ressort est comprimé.

2. Dispositif de marteau selon la revendication 1, dans lequel la partie de contact de l'élément annulaire comprend d'autres ouvertures (111) configurées pour être fermées par le collier (107) de l'élément central lorsque le collier de l'élément central déplace l'élément annulaire dans la deuxième direction dans laquelle le volume de la chambre annulaire diminue et pour conduire le fluide amortisseur dans la chambre annulaire en réponse à une situation dans laquelle le collier de l'élément central est éloignée de la partie de contact et le ressort déplace l'élément annulaire dans la première direction.

3. Dispositif de marteau selon la revendication 1 ou 2, dans lequel l'organe moteur (317) de la machine électrique linéaire est l'élément central du frein (301).

4. Dispositif de marteau selon la revendication 1 ou 2, dans lequel l'élément d'actionnement (415) est l'élément central du frein (401).

5. Dispositif de marteau selon une quelconque des revendications 1 à 4, dans lequel la machine électrique linéaire (316, 416) est une machine électrique linéaire tubulaire dont les bobines conductrices (319, 320) des enroulements sont configurées pour entourer l'organe moteur (317).

6. Dispositif de marteau selon la revendication 5, dans lequel l'organe moteur (317) comprend des aimants permanents annulaires (321, 322) disposés les uns après les autres dans une direction longitudinale de l'organe moteur, une direction axiale d'une forme annulaire de chacun des aimants permanents annulaires coïncidant avec la direction longitudinale de l'organe moteur et les directions de magnétisation des aimants permanents annulaires coïncidant avec la direction longitudinale de l'organe moteur, de sorte que les directions de magnétisation des aimants permanents annulaires successifs soient opposées.

7. Dispositif de marteau selon la revendication 5 ou 6, dans lequel une structure du noyau ferromagnétique (331) du stator (318) comprend des éléments ferromagnétiques annulaires (323, 324) successifs dans une direction longitudinale, entourant l'organe moteur et formant des fentes pour les bobines conductrices des enroulements.

8. Dispositif de marteau selon la revendication 7, dans lequel les éléments ferromagnétiques annulaires (323, 324) du stator (318) sont en acier massif et pourvus de fentes (332) s'étendant d'une surface d'entrefer (333) du stator vers, sans l'atteindre, une surface d'une section de culasse de la structure du noyau ferromagnétique du statoret traversant longitudinalement les éléments ferromagnétiques annulaires du stator afin de réduire les courants de Foucault induits dans la structure du noyau ferromagnétique du stator.

9. Dispositif de marteau selon la revendication 8, dans lequel les fentes des éléments ferromagnétiques annulaires (323, 324) du stator sont remplies d'un matériau solide électriquement isolant.

10. Dispositif de marteau selon une quelconque des revendications 1 à 9, dans lequel l'organe moteur (317) comprend une tige centrale (325) en matériau non ferromagnétique et des éléments ferromagnétiques annulaires (326, 327) autour de la tige centrale et formant la structure du noyau ferromagnétique de l'organe moteur.

11. Dispositif de marteau selon la revendication 10, dans lequel les éléments ferromagnétiques annulaires (326, 327) de l'organe moteur (317) sont en acier massif et pourvus de fentes (335) s'étendant d'une surface d'entrefer (334) de l'organe moteur vers, sans l'atteindre, une surface d'une section de culasse d'une structure du noyau ferromagnétique de l'organe moteur et s'étendant longitudinalement à travers les éléments ferromagnétiques annulaires de l'organe moteur afin de réduire les courants de Foucault induits dans ces éléments.

12. Dispositif de marteau selon la revendication 11, dans lequel les fentes des éléments ferromagnétiques annulaires (326, 327) de l'organe moteur sont remplies d'un matériau solide électriquement isolant.

13. Dispositif de marteau selon la revendication 11 ou 12, dans lequel les fentes des éléments ferromagnétiques annulaires (326, 327) de l'organe moteur comprennent des premières et des deuxièmes fentes, de sorte que les premières fentes soient plus courtes dans une direction radiale que les deuxièmes fentes.

14. Dispositif de marteau selon une quelconque des revendications 1 à 13, dans lequel le stator (318) comprend un cadre de stator (329) entourant la structure de noyau ferromagnétique (331) du stator et comprenant des canaux de refroidissement (330) pour conduire le fluide de refroidissement.
